# EUROPÄISCHE PATENTSCHRIFT

(11) **EP 4 001 137 B1**
(45) Veröffentlichungstag und Bekanntmachung des Hinweises auf die Patenterteilung: **19.03.2025**
(21) Anmeldenummer: 20207738.4
(22) Anmeldetag: 16.11.2020
(51) Int. Cl.: B65B 41/06, B65B 65/00, B65B 41/14, B65H 3/08, B65B 41/18, B65H 20/16, B65H 23/02

(54) **VERFAHREN ZUM HANDHABEN VON BAHNFÖRMIGEM VERPACKUNGSMATERIAL**
METHOD FOR HANDLING WEB-SHAPED PACKAGING MATERIAL
PROCÉDÉ DE MANIPULATION DE MATIÈRE D'EMBALLAGE EN FORME DE BANDE

(43) Veröffentlichungstag der Anmeldung: 25.05.2022
(73) Patentinhaber: Uhlmann Pac-Systeme GmbH & Co. KG, 88471 Laupheim (DE)
(72) Erfinder: Niederbacher, Yannick, 88477 Schwendi/Bussmannshausen (DE); Scharpf, Sebastian, 89171 Illerkirchberg (DE)
(74) Vertreter: Wächter, Jochen

(56) Entgegenhaltungen:
- EP-A2- 0 270 109
- EP-A2- 2 735 407
- WO-A2-01/74696
- DE-A1- 10 017 347
- DE-A1- 19 817 174
- US-A- 5 156 387
- US-A1- 2014 147 239
- US-B2- 10 526 157

## Beschreibung

Die vorliegende Erfindung betrifft ein Verfahren zum Handhaben von bahnförmigem Verpackungsmaterial, insbesondere zum Einlegen des bahnförmigen Verpackungsmaterials in eine Verpackungsmaschine.

Häufig verläuft eine Bahn aus biegeschlaffem Verpackungsmaterial, wie zum Beispiel eine Folienbahn, in Verpackungsmaschinen durch eine Mehrzahl von Bearbeitungsstationen, in denen das Verpackungsmaterial bearbeitet und Produkte in das Verpackungsmaterial gefüllt bzw. mit dem Verpackungsmaterial verpackt werden. Ist die Verpackungsmaschine beispielsweise eine Blistermaschine, wird in dieser eine Formfolienbahn unter anderem durch eine Formstation zum Formen von Blisternäpfen, eine Füllstation zum Befüllen der Blisternäpfe mit medizinischen oder pharmazeutischen Produkten und eine Siegelstation zum Siegeln einer Deckfolienbahn auf die Formfolienbahn geführt.

Zu Beginn des Herstellungsprozesses muss das biegeschlaffe, bahnförmige Verpackungsmaterial in die Verpackungsmaschine eingelegt werden. Dabei ist das Verpackungsmaterial entlang eines vorgegebenen Pfads durch die Bearbeitungsstationen sowie um diverse Führungs- und Umlenkelemente zu führen, bevor mit der Verarbeitung begonnen werden kann. Aufgrund der schwierigen Handhabung des sensiblen, biegeschlaffen Verpackungsmaterials und der beengten Platzverhältnisse in einer Verpackungsmaschine ist dieser Vorgang sehr aufwendig und wird manuell durchgeführt.

Die US 5 156 387 offenbart eine Handhabungsvorrichtung für bogenförmige Produkte, die einzelne Produkte eines Magazins mittels eines Saugnapfes und Vakuum abnimmt. Der Saugnapf umfasst einen Grundkörper, welcher wellenförmige Seitenkanten aufweist, an denen umlaufend eine flexible Saugschürze angebracht ist, die gegen das bogenförmige Produkt gedrückt werden kann.

Die DE 100 17 347 A1 offenbart eine Spannkluppe zum Halten von Rändern einer bewegten Materialbahn, insbesondere einer Kunststofffolie.

Die US 10 526 157 B2 offenbart eine Vorrichtung, bei welcher eine Folienbahn in eine Verpackungsmaschine eingezogen wird, wobei hierzu Riemen vorgesehen sind, an denen Klemmeinrichtungen angebracht sind, die die Längsränder der Folienbahn erfassen.

Es ist eine Aufgabe der vorliegenden Erfindung, ein Verfahren bereitzustellen, das eine sichere und zuverlässige Handhabung von bahnförmigem Verpackungsmaterial ermöglicht und das Einlegen des Verpackungsmaterials in eine Verpackungsmaschine vereinfacht.

Diese Aufgabe wird durch die Merkmale des Anspruchs 1 gelöst. Bevorzugte Ausführungsformen sind Gegenstand der abhängigen Unteransprüche.

Ein erfindungsgemäßes Verfahren zum Einlegen eines biegeschlaffen, bahnförmigen Verpackungsmaterials in eine Verpackungsmaschine umfasst die folgenden Schritte:
- Bereitstellen des bahnförmigen Verpackungsmaterials;
- Erfassen des bahnförmigen Verpackungsmaterials mittels einer Handhabungsvorrichtung, wobei ein freier Endabschnitt des bahnförmigen Verpackungsmaterials in einer Querrichtung des bahnförmigen Verpackungsmaterials gewölbt ist und von der Handhabungsvorrichtung hervorsteht; und
- Einführen des freien Endabschnitts des bahnförmigen Verpackungsmaterials in eine erste Bearbeitungsstation der Verpackungsmaschine mittels der Handhabungsvorrichtung.

Durch die Wölbung des Verpackungsmaterials in Querrichtung des bahnförmigen Verpackungsmaterials werden eine Zugkraft und eine daraus resultierende Spannung in dem Verpackungsmaterial erzeugt. Diese Wölbung des Verpackungsmaterials bzw. die Zugkraft und Spannung im Verpackungsmaterial verleihen dem Verpackungsmaterial eine gewisse Stabilität und Steifigkeit. Wird nun ein freier Endabschnitt des Verpackungsmaterials von der Handhabungsvorrichtung erfasst, steht er aufgrund dieses Effekts in Längsrichtung des Verpackungsmaterials von der Handhabungsvorrichtung hervor. Der hervorstehende Endabschnitt des Verpackungsmaterials kann dann mittels der Handhabungsvorrichtung auf einfache Art und Weise in eine beliebig ausgerichtete Bearbeitungsstation einer Verpackungsmaschine eingeführt werden.

Da das Verfahren das Einführen des bahnförmigen Verpackungsmaterials in eine Bearbeitungsstation der Verpackungsmaschine ermöglicht, kann eine (Teil-) Automatisierung des Einlegens des biegeschlaffen, bahnförmigen Verpackungsmaterials in die Verpackungsmaschine realisiert werden.

Es versteht sich, dass die "erste" Bearbeitungsstation eine beliebige Bearbeitungsstation einer Mehrzahl von Bearbeitungsstationen sein kann oder auch als einzige Bearbeitungsstationen vorgesehen sein kann.

Die Verpackungsmaschine ist mit einer Handhabungsvorrichtung versehen. Alle nachfolgend in Zusammenhang mit der Handhabungsvorrichtung und der Verpackungsmaschine beschriebenen Merkmale, Funktionen und Tätigkeiten sind folglich analog auf das erfindungsgemäße Verfahren übertragbar bzw. können als Verfahrensschritte formuliert werden.

Vorzugsweise werden die hierin beschriebenen und beanspruchten Verfahrensschritte in der jeweils angegebenen Reihenfolge ausgeführt.

Das Bereitstellen des bahnförmigen Verpackungsmaterials erfolgt vorzugsweise in einem Eingangsbereich der Verpackungsmaschine und umfasst beispielsweise das Bereitstellen des Verpackungsmaterials auf einer Vorratsrolle oder das Einführen einer Bahn des Verpackungsmaterials in die Verpackungsmaschine.

Das Verfahren kann auch das Bereitstellen eines weiteren bahnförmigen Verpackungsmaterials zusätzlich zum bahnförmigen Verpackungsmaterial auf entsprechende Art und Weise umfassen. Das erfindungsgemäße Verfahren bzw. dessen Schritte können dann für jedes bahnförmige Verpackungsmaterial analog erfolgen. Insbesondere sind das bahnförmige Verpackungsmaterial und das weitere bahnförmige Verpackungsmaterial durch eine Formfolienbahn und eine Deckfolienbahn gebildet.

In einer besonders bevorzugten Ausführungsform umfasst das Verfahren das Hindurchführen des bahnförmigen Verpackungsmaterials entlang eines vorgegebenen Pfads durch die Verpackungsmaschine mittels der Handhabungsvorrichtung. Das Hindurchführen des bahnförmigen Verpackungsmaterials durch die Verpackungsmaschine umfasst bevorzugt das Führen des bahnförmigen Verpackungsmaterials um entlang des vorgegebenen Pfads angeordnete Führungs- und Umlenkelemente und das Einführen des bahnförmigen Verpa-ckungsmaterials in zumindest eine entlang des vorgegebenen Pfads angeordnete Bearbeitungsstation. Besonders bevorzugt wird das bahnförmige Verpackungsmaterial dabei um alle Führungs- und Umlenkelemente geführt sowie in alle Bearbeitungsstationen der Verpackungsmaschine eingeführt.

Es ist vorteilhaft, wenn das Verfahren weiterhin die Schritte umfasst:
- Erfassen des eingeführten Endabschnitts des bahnförmigen Verpackungsmaterials durch die erste Bearbeitungsstation nach dem Einführen des freien Endabschnitts des bahnförmigen Verpackungsmaterials in die erste Bearbeitungsstation;
- Freigeben des freien Endabschnitts des bahnförmigen Verpackungsmaterials durch die Handhabungsvorrichtung vor der ersten Bearbeitungsstation nach dem Erfassen des freien Endabschnitts durch die erste Bearbeitungsstation;
- Hindurchführen des bahnförmigen Verpackungsmaterials durch die erste Bearbeitungsstation;
- erneutes Erfassen des freien Endabschnitts des bahnförmigen Verpackungsmaterials mittels der Handhabungsvorrichtung hinter der ersten Bearbeitungsstation.

Auf diese Art und Weise wird das bahnförmige Verpackungsmaterial an die Bearbeitungsstation heran- und in diese eingeführt, die den Endabschnitt des Verpackungsmaterials dann erfasst.

Die Handhabungsvorrichtung kann das Verpackungsmaterial dann freigegeben und um die Bearbeitungsstation herum bewegt werden, um den freien Endabschnitt des bahnförmigen Verpackungsmaterials hinter der Bearbeitungsstation erneut zu erfassen. Dies ist insbesondere dann von Vorteil, wenn die Bearbeitungsstation zur Handhabungsvorrichtung hin geschlossen ist oder nicht (weit genug) geöffnet werden kann, um ein Hindurchführen der Handhabungsvorrichtung bzw. der Halteeinrichtung durch die Bearbeitungsstation zu ermöglichen.

Das Erfassen des Endabschnitts des bahnförmigen Verpackungsmaterials durch die erste Bearbeitungsstation kann das Klemmen des Verpackungsmaterials in der ersten Bearbeitungsstation umfassen, beispielsweise durch einen Walzenvorschub. Das bahnförmige Verpackungsmaterial ist dann in der ersten Bearbeitungsstation gesichert, sodass es nach der Freigabe durch die Handhabungsvorrichtung nicht wieder aus der ersten Bearbeitungsstation herausgezogen wird.

Die erste Bearbeitungsstation und gegebenenfalls jede der Mehrzahl von Bearbeitungsstationen weist eine Durchlaufrichtung auf, in der das bahnförmige Verpackungsmaterial durch die jeweilige Bearbeitungsstation hindurchgeführt ist. Die Angaben "vor" und "hinter" der Bearbeitungsstation beziehen sich dann auf die jeweilige Durchlaufrichtung.

Die erste Bearbeitungsstation kann zumindest eine Führung und zumindest ein Vorschubmittel, wie zum Beispiel einen Walzenvorschub, umfassen. Das Hindurchführen des bahnförmigen Verpackungsmaterials durch die erste Bearbeitungsstation kann durch die zumindest eine Führung und das zumindest eine Vorschubmittel erfolgen. Das bahnförmige Verpackungsmaterial wird dann durch die Bearbeitungsstation eingezogen und durch diese hindurchgeführt, bis der freie Endabschnitt wieder aus der Bearbeitungsstation heraus tritt.

Es ist aber auch denkbar, dass das Einführen des freien Endabschnitts des bahnförmigen Verpackungsmaterials in die erste Bearbeitungsstation bereits so weit erfolgt, dass der freie Endabschnitt schon wieder aus der Bearbeitungsstation heraustritt.

Das Hindurchführen durch die Bearbeitungsstation kann auch schrittweise erfolgen, z.B. indem die Handhabungsvorrichtung nach dem Freigeben des freien Endabschnitts des bahnförmigen Verpackungsmaterials das bahnförmige Verpackungsmaterial ein oder mehrere Male an einer entfernteren Stelle vor der Bearbeitungsstation erneut erfasst, das bahnförmige Verpackungsmaterial weiter in die Bearbeitungsstation schiebt und dann wieder freigibt. Während die Handhabungsvorrichtung das Verpackungsmaterial erfasst und nachschiebt, gibt die Bearbeitungsstation das Verpackungsmaterial frei, z.B. indem sie die Klemmung löst oder den Vorschub entsprechend mitbewegt.

Schließlich kann die Handhabungsvorrichtung um die erste Bearbeitungsstation herum bewegt werden, um den freien Endabschnitt erneut zu erfassen.

Das erneute Erfassen des freien Endabschnitts des bahnförmigen Verpackungsmaterials hinter der ersten Bearbeitungsstation erfolgt vorzugsweise gemäß dem ursprünglichen Erfassen des freien Endabschnitts, wobei insbesondere der freie Endabschnitt des bahnförmigen Verpackungsmaterials in der Querrichtung des bahnförmigen Verpackungsmaterials gewölbt ist und von der Handhabungsvorrichtung hervorsteht.

Gemäß einer alternativen Ausführungsform umfasst das Verfahren das gemeinsame Hindurchführen des freien Endabschnitts des bahnförmigen Verpackungsmaterials und der Handhabungsvorrichtung durch die erste Bearbeitungsstation. In diesem Fall ist es nicht erforderlich, dass die Handhabungsvorrichtung den Endabschnitt des bahnförmigen Verpackungsmaterials freigibt, um um die Bearbeitungsstation herum bewegt zu werden.

Vielmehr umfasst das gemeinsame Hindurchführen das Einführen des freien Endabschnitts des bahnförmigen Verpackungsmaterials in die erste Bearbeitungsstation durch die Handhabungsvorrichtung und das gemeinsame Bewegen des freien Endabschnitts des bahnförmigen Verpackungsmaterials und der Handhabungsvorrichtung, insbesondere der Halteeinrichtung, durch die erste Bearbeitungsstation. Dadurch kann auf das Erfassen des bahnförmigen Verpackungsmaterials durch die Bearbeitungsstation sowie das Freigeben und erneute Erfassen des bahnförmigen Verpackungsmaterials durch die Handhabungsvorrichtung verzichtet werden, wodurch das Verfahren zuverlässiger und weniger fehleranfällig wird.

Diese Variante ist vorteilhaft einsetzbar, wenn die erste Bearbeitungsstation zu Handhabungsvorrichtung hin geöffnet oder zu öffnen ist und sich die Werkzeuge, Vorschub-, Führungs- und/oder Umlenkmittel der ersten Bearbeitungsstation so weit öffnen lassen, dass die Handhabungsvorrichtung bzw. Halteeinrichtung hindurchbewegt werden kann.

Bevorzugt umfasst das Verfahren weiterhin das Öffnen der ersten Bearbeitungsstation vor dem gemeinsamen Hindurchführen des freien Endabschnitts des bahnförmigen Verpackungsmaterials und der Handhabungsvorrichtung sowie das Schließen der ersten Bearbeitungsstation nach dem gemeinsamen Hindurchführen.

Die Verpackungsmaschine umfasst bevorzugt eine Mehrzahl von Bearbeitungsstationen, die die erste Bearbeitungsstation und zumindest eine zweite Bearbeitungsstation umfasst. Das Verfahren umfasst in diesem Fall vorzugsweise das Einführen des freien Endabschnitts des bahnförmigen Verpackungsmaterials in jede Bearbeitungsstation der Mehrzahl von Bearbeitungsstationen. Dadurch kann das Verfahren weiter vereinfacht und automatisiert werden.

Das Hindurchführen des bahnförmigen Verpackungsmaterials durch jeweils eine Bearbeitungsstation der Mehrzahl von Bearbeitungsstationen kann dabei gemäß einer der zuvor beschriebenen Varianten erfolgen. So kann je nach Ausbildung der jeweiligen Bearbeitungsstation ein jeweils dafür günstiges Einführen und Hindurchführen des Verpackungsmaterials durch die Bearbeitungsstation gewählt werden. Genauer kann je nach Ausbildung der jeweiligen Bearbeitungsstation der Mehrzahl von Bearbeitungsstationen der eingeführte Endabschnitt des bahnförmigen Verpackungsmaterials durch die jeweilige Bearbeitungsstation erfasst, durch die Handhabungsvorrichtung vor der jeweiligen Bearbeitungsstation freigegeben, durch die jeweilige Bearbeitungsstation hindurch geführt und durch die Handhabungsvorrichtung hinter der jeweiligen Bearbeitungsstation erneut erfasst werden oder der eingeführte Endabschnitt des bahnförmigen Verpackungsmaterials kann gemeinsame mit der Handhabungsvorrichtung durch die jeweilige Bearbeitungsstation hindurch geführt werden.

Das Verfahren umfasst ferner bevorzugt den Schritt:
- Abrollen der Halteeinrichtung auf einer Oberfläche des bahnförmigen Verpackungsmaterials in Querrichtung des bahnförmigen Verpackungsmaterials entlang der Krümmung des Kontaktbereichs.

Durch das Abrollen der Halteeinrichtung auf der Oberfläche des Verpackungsmaterials wird erreicht, dass die Halteeinrichtung das Verpackungsmaterial möglichst sauber und faltenfrei erfasst und insbesondere eine Zugkraft im Verpackungsmaterial in Querrichtung des Verpackungsmaterials erzeugt.

Dass die Halteeinrichtung auf der Oberfläche des bahnförmigen Verpackungsmaterials abrollt bedeutet, dass der Kontaktbereich der Halteeinrichtung das Verpackungsmaterial zunächst in einem ersten Endbereich des Kontaktbereichs der Halteeinrichtung erfasst und dann entlang der Krümmung des Kontaktbereichs das Verpackungsmaterial zunehmend bis zu einem zweiten Endbereich des Kontaktbereichs der Halteeinrichtung erfasst, wobei der zweite Endbereich dem ersten Endbereich in Längsrichtung der Halteeinrichtung gegenüberliegt. Vorzugsweise ist der erste Endbereich des Kontaktbereichs an einem ersten Ende der Halteeinrichtung angeordnet und der zweite Endbereich des Kontaktbereichs an einem zweiten Ende der Halteeinrichtung angeordnet.

Ist die Halteeinrichtung als Saugeinrichtung ausgebildet, führt dies dazu, dass in Längsrichtung der Halteeinrichtung ein Saugnapf nach dem anderen oder eine Bohrung nach der anderen das Verpackungsmaterial erfasst. Das Verfahren umfasst daher bevorzugt das sukzessive Erfassen des freien Endabschnitts des bahnförmigen Verpackungsmaterials durch eine Mehrzahl von Saugnäpfen bzw. Bohrungen.

Schließlich umfasst der Schritt des Erfassens des bahnförmigen Verpackungsmaterials mittels der Handhabungsvorrichtung vorzugsweise das Erzeugen einer Zugkraft im bahnförmigen Verpackungsmaterial in der Querrichtung des bahnförmigen Verpackungsmaterials und somit bevorzugt parallel zur Längsrichtung der Halteeinrichtung.

Für alle hierin beschriebenen Ausführungsformen gilt, dass die Zugkraft vorzugsweise mindestens 15 N, mehr bevorzugt mindestens 45N und noch mehr bevorzugt mindestens 65 N beträgt, um eine ausreichende Stabilität des von der Halteeinrichtung hervorstehenden Endabschnitts des bahnförmigen Verpackungsmaterials zu bewirken und Widerstände zu überwinden, wie z.B. Reibungswiderstände sowie die Trägheit der Vorratsrolle und der Umlenkelemente.

Es ist weiterhin bevorzugt, dass die Zugkraft maximal 150 N, mehr bevorzugt maximal 100 N, noch mehr bevorzugt maximal 80 N beträgt, um das bahnförmige Verpackungsmaterial nicht zu beschädigen.

Das bahnförmige Verpackungsmaterial ist bevorzugt sehr dünn ausgebildet. D. h., dass eine Dicke des Verpackungsmaterials senkrecht zur Längsrichtung und senkrecht zur Querrichtung des Verpackungsmaterials gegenüber einer Länge des Verpackungsmaterials in Längsrichtung und einer Breite des Verpackungsmaterials in Querrichtung vernachlässigbar gering ist.

Beispielsweise beträgt die Dicke des Verpackungsmaterials weniger als 3 mm, vorzugsweise weniger als 2 mm, bevorzugt weniger als 1 mm. Die Breite des Verpackungsmaterials beträgt beispielsweise zwischen 0,01 m und 1 m, bevorzugt zwischen 0,02 m und 0,5 m, mehr bevorzugt zwischen 0,02 m und 0,2 m. Meter und die Länge des Verpackungsmaterials beträgt vorzugsweise zwischen 1 m und 10000 m, bevorzugt zwischen 2 m und 5000 m, mehr bevorzugt zwischen 5 m und 2000 m.

Die Zugkraft im bahnförmigen Verpackungsmaterial wirkt somit in Querrichtung des bahnförmigen Verpackungsmaterials parallel zur gewölbten Oberseite des bahnförmigen Verpackungsmaterials. Bevorzugt wird die Zugkraft durch das Abrollen der Halteeinrichtung auf der Oberseite des bahnförmigen Verpackungsmaterials beim Erfassen des Verpackungsmaterials durch die Handhabungsvorrichtung erzeugt.

Eine beim erfindungsgemäßen Verfahren einsetzbare Handhabungsvorrichtung zum Handhaben von biegeschlaffem, bahnförmigem Verpackungsmaterial umfasst eine Halteeinrichtung, die zum Erfassen des bahnförmigen Verpackungsmaterials eingerichtet ist. Die Halteeinrichtung erstreckt sich weiter in eine Längsrichtung als in Querrichtungen, die senkrecht zur Längsrichtung der Halteeinrichtung ausgerichtet sind, und weist einen Kontaktbereich auf, der durch zumindest eine Kontaktstelle zum Kontaktieren des bahnförmigen Verpackungsmaterials definiert ist. Der Kontaktbereich weist in Längsrichtung der Halteeinrichtung eine Krümmung auf.

Durch die Krümmung der Halteeinrichtung im Kontaktbereich wird von der Halteeinrichtung erfasstes Verpackungsmaterial in einer Querrichtung des bahnförmigen Verpackungsmaterials gewölbt, wobei wiederum eine Zugkraft und eine daraus resultierende Spannung in dem Verpackungsmaterial erzeugt werden. Diese Wölbung des Verpackungsmaterials bzw. die Zugkraft und Spannung im Verpackungsmaterial verleihen dem Verpackungsmaterial eine gewisse Stabilität und Steifigkeit. Wird nun ein freier Endabschnitt des Verpackungsmaterials von der Halteeinrichtung erfasst, steht er aufgrund dieses Effekts in Längsrichtung des Verpackungsmaterials von der Halteeinrichtung hervor. Der hervorstehende Endabschnitt des Verpackungsmaterials kann dann mittels der Handhabungsvorrichtung auf einfache Art und Weise in eine beliebig ausgerichtete Bearbeitungsstation einer Verpackungsmaschine eingeführt werden.

Dass der freie Endabschnitt des bahnförmigen Verpackungsmaterials von der Halteeinrichtung hervorsteht bedeutet, dass das bahnförmige Verpackungsmaterial in einer (Querschnitts-) Ansicht senkrecht zur Längsrichtung der Halteeinrichtung vom Kontaktbereich bis zu einem voraneilenden, freien Rand des Endabschnitts parallel bzw. tangential zur zumindest einen Kontaktstelle verläuft. Insbesondere weist das bahnförmige Verpackungsmaterial zwischen dem Kontaktbereich und dem voraneilenden Rand weder einen Knick noch eine Krümmung in Längsrichtung des bahnförmigen Verpackungsmaterials auf, sondern verläuft gerade. Mit anderen Worten hängt der freie Endabschnitt des bahnförmigen Verpackungsmaterials nicht in Richtung der Schwerkraft von der Halteeinrichtung herab. So weist der freie Endabschnitt unabhängig von der Orientierung der Halteeinrichtung stets eine definierte Ausrichtung relativ zur Halteeinrichtung auf und kann gezielt durch die Verpackungsmaschine geführt und in eine Bearbeitungsstation eingeführt werden.

Da die Handhabungsvorrichtung das Einführen des bahnförmigen Verpackungsmaterials in eine Bearbeitungsstation der Verpackungsmaschine ermöglicht, kann eine (Teil-) Automatisierung des Einlegens des biegeschlaffen, bahnförmigen Verpackungsmaterials in die Verpackungsmaschine realisiert werden. Zum Beispiel ist hierzu ein Roboter vorgesehen, der die Handhabungsvorrichtung trägt und entlang der Verpackungsmaschine und deren Bearbeitungsstationen bewegt.

Bevorzugt ist die Halteeinrichtung daher dazu eingerichtet, aufgrund der Krümmung des Kontaktbereichs entlang der Krümmung eine Zugkraft im Verpackungsmaterial in einer Querrichtung des Verpackungsmaterials zu erzeugen, die senkrecht zur Längsrichtung des Verpackungsmaterials ausgerichtet ist.

Der Kontaktbereich der Halteeinrichtung ist dazu eingerichtet, das von der Halteeinrichtung erfasste bahnförmige Verpackungsmaterial zu kontaktieren. Der Kontaktbereich umfasst vorzugsweise alle Kontaktstellen der Halteeinrichtung zum Verpackungsmaterial. Die zumindest eine Kontaktstelle kann als flächiger, linienförmiger oder punktueller Kontakt ausgeprägt sein, je nach Ausbildung der Halteeinrichtung. Es versteht sich, dass bei punktuellem Kontakt eine Mehrzahl von Kontaktstellen zur Definition der Krümmung erforderlich ist.

Weist die Halteeinrichtung genau eine Kontaktstelle auf, definiert diese den Kontaktbereich und die Krümmung. Dies kann der Fall sein, wenn die Kontaktstelle einen zumindest teilweise in Längsrichtung der Halteeinrichtung verlaufenden flächigen oder linienförmigen Kontakt zum Verpackungsmaterial aufweist.

Weist die Halteeinrichtung eine Mehrzahl von Kontaktstellen auf, ist der Kontaktbereich definiert durch die Mehrzahl von Kontaktstellen sowie deren Verbindung zumindest in Längsrichtung der Halteeinrichtung. Folglich bildet die Mehrzahl von Kontaktstellen den Kontaktbereich und definiert somit die Krümmung. Die Kontaktstellen der Mehrzahl von Kontaktstellen liegen vorzugsweise auf einer Krümmungslinie der Krümmung des Kontaktbereichs. Bevorzugt erstreckt sich der Kontaktbereich in Längsrichtung von einem ersten Kontakt der Halteeinrichtung mit dem Verpackungsmaterial bis zu einem letzten Kontakt der Halteeinrichtung mit dem Verpackungsmaterial.

Vorzugsweise erstreckt sich die Krümmung in Längsrichtung der Halteeinrichtung über den gesamten Kontaktbereich. D. h., dass der gesamte Kontaktbereich, der vorzugsweise alle Kontaktstellen umfasst, in Längsrichtung gekrümmt ist. Dadurch wird erreicht, dass keine weiteren Kontaktstellen das Verpackungsmaterial ablenken und dem gewünschten Effekt durch Verringerung der Stabilität des Endabschnitts des Verpackungsmaterials entgegenwirken.

In einer Querschnittsansicht parallel zur Längsrichtung der Halteeinrichtung und senkrecht zu einer Querrichtung der Halteeinrichtung, die parallel zur Längsrichtung des Verpackungsmaterials ausgerichtet ist, ist Krümmung des Kontaktbereichs als gekrümmte Linie dargestellt bzw. projiziert. Die gekrümmte Linie ist folglich kennzeichnend für die Krümmung des Kontaktbereichs.

In einer bevorzugten Ausführungsform ist die Krümmung des Kontaktbereichs durch eine quadratische Funktion definiert. In diesem Fall weist die Kurve der Krümmung bzw. die gekrümmte Linie in der Querschnittsansicht eine quadratische Funktionsgleichung und somit einen quadratischen Verlauf auf. Die Kurve der Krümmung bzw. die gekrümmte Linie kann aber auch ein Kreissegment mit konstantem Krümmungsradius sein.

Vorzugsweise weist die Krümmung einen Krümmungsradius auf, der zwischen 1 mm und 10000 mm, bevorzugt zwischen 1000 mm und 3000 mm, mehr bevorzugt zwischen 2200 mm und 2400 mm beträgt.

Eine Länge der Halteeinrichtung ist in Längsrichtung der Halteeinrichtung definiert. Die Halteeinrichtung weist weiterhin eine Höhe auf, die in einer ersten Querrichtung senkrecht zur Längsrichtung der Halteeinrichtung definiert ist, und weist eine Breite auf, die in einer zweiten Querrichtung senkrecht zur Längsrichtung der Halteeinrichtung und senkrecht zur ersten Querrichtung definiert ist. Erfasst die Halteeinrichtung ein bahnförmiges Verpackungsmaterial, ist die Länge der Halteeinrichtung vorzugsweise parallel zur Querrichtung des Verpackungsmaterials ausgerichtet, die Breite der Halteeinrichtung bevorzugt parallel zur Längsrichtung des Verpackungsmaterials ausgerichtet und die Höhe senkrecht zu einer Oberseite des Verpackungsmaterials ausgerichtet.

Um den beengten Platzverhältnissen in einer Verpackungsmaschine gerecht zu werden und das bahnförmige Verpackungsmaterial bei Bedarf samt Halteeinrichtung durch eine Bearbeitungsstation der Verpackungsmaschine hindurch bewegen zu können, ist es vorteilhaft, die Breite und die Höhe der Halteeinrichtung möglichst gering zu wählen.

Die Breite der Halteeinrichtung beträgt vorzugsweise zwischen 1 mm und 100 mm, bevorzugt zwischen 1 mm und 50 mm, mehr bevorzugt zwischen 1 mm und 30 mm.

Die Höhe der Halteeinrichtung beträgt vorzugsweise zwischen 1 mm und 100 mm, bevorzugt zwischen 1 mm und 50 mm, mehr bevorzugt zwischen 1 mm und 25 mm.

Die Länge der Halteeinrichtung beträgt vorzugsweise zwischen 1 mm und 3000 mm, bevorzugt zwischen 100 mm und 1000 mm, mehr bevorzugt zwischen 200 mm und 400 mm.

Für die Wertebereich der Breite, Höhe und Länge der Halteeinrichtung gilt, wie für alle anderen hierin angegebenen Wertebereiche, dass sie alle zwischen den Bereichen enthaltenen Werte umfassen und insbesondere auch beliebige Unterbereiche, wobei die angegebenen Unter- und Obergrenzen unabhängig voneinander aus den Bereichen gewählt sein können, insbesondere in ganzen mm.

Je länger die Halteeinrichtung ist, desto weiter kann sich der gekrümmte Kontaktbereich in Längsrichtung der Halteeinrichtung und somit in Querrichtung des bahnförmigen Verpackungsmaterials erstrecken. Bei längerer Halteeinrichtung und längerem gekrümmten Kontaktbereich wird ein breiterer Teil des Verpackungsmaterials gewölbt, sodass der von der Halteeinrichtung erfasste Endabschnitt des Verpackungsmaterials stabiler ist.

In einer bevorzugten Ausführungsform ist die Halteeinrichtung als Saugeinrichtung ausgebildet. Diese eignet sich besonders gut zum Handhaben sensibler Verpackungsmaterialien, wie zum Beispiel Folien, kann zum Erfassen bzw. Freigegeben des Verpackungsmaterials einfach aktiviert und deaktiviert werden und platzsparend ausgebildet sein.

Die Saugeinrichtung ein Saugrohr umfassen, in dessen Mantelfläche eine Mehrzahl von Bohrungen vorgesehen ist, wobei die Bohrungen vorzugsweise in Längsrichtung der Halteeinrichtung hintereinander angeordnet sind. Im Inneren des Saugrohrs ist vorzugsweise eine Leitung ausgebildet, die einerseits in Fluidverbindung mit der Mehrzahl von Bohrungen in der Mantelfläche und andererseits in Fluidverbindung mit einer Unterdruckquelle, wie zum Beispiel einer Vakuumpumpe steht. Die Leitung verläuft vorzugsweise parallel zur Längsrichtung der Halteeinrichtung.

Die Saugeinrichtung kann eine Mehrzahl von Saugnäpfen umfassen, wobei die Saugnäpfe vorzugsweise in Längsrichtung der Halteeinrichtung hintereinander angeordnet sind. Die Saugnäpfe können unabhängig voneinander einzeln oder gruppenweise ansteuerbar sein, zum Beispiel indem sie jeweils mittels einer eigenen Leitung mit einer Unterdruckquelle, wie zum Beispiel einer Vakuumpumpe, in Fluidverbindung stehen. Dabei können die Saugnäpfe an einem Körper der Saugeinrichtung angebracht sein. Die Saugnäpfe können aber auch an einem Saugrohr, wie zuvor beschriebenen, vorgesehen sein und über jeweils eine der Mehrzahl von Bohrungen mit der Unterdruckquelle in Fluidverbindung stehen.

In einer alternativen Ausführungsform kann die Halteeinrichtung auch als Klemmeinrichtung ausgebildet sein, die beispielsweise eine die Krümmung des Kontaktbereichs definierende Klemmleiste sowie zumindest ein Gegenstück zum Klemmen des Verpackungsmaterials an die Klemmleiste umfasst. Das Gegenstück kann beispielsweise als komplementär gekrümmte, weitere Klemmleiste ausgebildet sein.

Es ist auch denkbar, dass die Halteeinrichtung dazu eingerichtet ist, das Verpackungsmaterial im Kontaktbereich elektrostatisch zu erfassen, oder im Kontaktbereich adhäsiv ausgebildet ist, um das Verpackungsmaterial zu erfassen.

Um möglichst flexibel einsetzbar zu sein und das bahnförmige Verpackungsmaterial in beliebiger Ausrichtung in die jeweilige Bearbeitungsstation einführen zu können, kann die Halteeinrichtung beweglich gelagert sein. Vorzugsweise ist die Halteeinrichtung um ihre Längsachse oder eine Achse parallel zu ihrer Längsachse drehbar gelagert und horizontal sowie vertikal verschiebbar gelagert.

Bevorzugt umfasst die Handhabungsvorrichtung eine Kupplung zum Verbinden der Handhabungsvorrichtung mit einem Manipulator, wie zum Beispiel einem (Mehr-Achs-) Roboter.

Eine Verpackungsmaschine für das erfindungsgemäße Verfahren umfasst bevorzugt das biegeschlaffe, bahnförmige Verpackungsmaterial, insbesondere eine Formfolienbahn oder eine Deckfolienbahn, das eine Längsrichtung aufweist, eine erste Bearbeitungsstation zum Bearbeiten des bahnförmigen Verpackungsmaterials in der Verpackungsmaschine, und eine Handhabungsvorrichtung zum Einführen des freien Endabschnitts des bahnförmigen Verpackungsmaterials in die erste Bearbeitungsstation.

Alle hierin zur Handhabungsvorrichtung beschriebenen Merkmale treffen daher analog auch auf eine Verpackungsmaschine zu, die die Handhabungsvorrichtung umfasst. Ebenso sind Merkmale der Handhabungsvorrichtung, die in Zusammenhang mit der Verpackungsmaschine beschrieben sind, analog auch auf die Handhabungsvorrichtung in Alleinstellung übertragbar.

Die Verpackungsmaschine ist bevorzugt als Blistermaschine ausgebildet. Die Blistermaschine ist wiederum zum Herstellen von Blisterpackungen und Befüllen der Blisterpackungen mit medizinischen oder pharmazeutischen Produkten eingerichtet.

Das biegeschlaffe, bahnförmige Verpackungsmaterial ist bevorzugt eine Formfolienbahn oder ein Deckfolienbahn. Die hierin bezüglich des bahnförmigen Verpackungsmaterials beschriebenen Merkmale lassen sich daher analog auf beliebige weitere bahnförmige Verpackungsmaterialien übertragen.

Zum Beispiel umfasst die Verpackungsmaschine ein weiteres biegeschlaffes, bahnförmiges Verpackungsmaterial, wobei ein bahnförmiges Verpackungsmaterial eine Formfolienbahn und das andere bahnförmige Verpackungsmaterial eine Deckfolienbahn sein kann. Es ist dann möglich, sowohl die Formfolienbahn als auch die Deckfolienbahn mittels der Handhabungsvorrichtung in die Verpackungsmaschine einzulegen.

Das biegeschlaffe, bahnförmige Verpackungsmaterial ist bevorzugt auf einer Vorratsrolle in der Verpackungsmaschine bereitgestellt. Die Vorratsrolle wird einlaufseitig bzw. in einem Eingangsbereich der Verpackungsmaschine bereitgestellt. Von der Vorratsrolle ist das bahnförmige Verpackungsmaterial entlang eines vordefinierten Pfads durch die Verpackungsmaschine zu führen, insbesondere zumindest durch die erste Bearbeitungsstation sowie um Führungs- und Umlenkelemente. Während des Einlegens wird das bahnförmige Verpackungsmaterial von der Vorratsrolle abgerollt.

Die Verpackungsmaschine umfasst bevorzugt eine Mehrzahl von Bearbeitungsstationen, die die erste Bearbeitungsstation und zumindest eine zweite Bearbeitungsstation umfasst. Unabhängig davon, ob die Verpackungsmaschine nur die erste Bearbeitungsstation oder die Mehrzahl von Bearbeitungsstationen umfasst, ist jede Bearbeitungsstation der Verpackungsmaschine bevorzugt gewählt aus einer Schneidvorrichtung, einer Klebevorrichtung, einem Vorschub, einer Heizvorrichtung, einer Formvorrichtung, einer Siegelvorrichtung, einer Stanzvorrichtung, einer Prägevorrichtung und einer Rillvorrichtung.

Die Bezeichnung "erste Bearbeitungsstation" ist dabei lediglich zur Abgrenzung gegenüber weiteren möglichen Bearbeitungsstationen gewählt und bezieht sich weder auf eine Reihenfolge mehrerer Bearbeitungsstationen, noch impliziert sie, dass weitere Bearbeitungsstationen vorhanden sein müssen. Die erste Bearbeitungsstation kann jede beliebige Bearbeitungsstation der Verpackungsmaschine sein, in die das bahnförmige Verpackungsmaterial mittels der Handhabungsvorrichtung eingeführt werden soll.

Umfasst die Verpackungsmaschine die Mehrzahl von Bearbeitungsstationen, ist die Handhabungsvorrichtung vorzugsweise dazu eingerichtet, den freien Endabschnitt des bahnförmigen Verpackungsmaterials in jede Bearbeitungsstation der Mehrzahl von Bearbeitungsstationen einzuführen. Alle hierin bezüglich der ersten Bearbeitungsstation und des Einführens des bahnförmigen Verpackungsmaterials in die erste Bearbeitungsstation beschriebenen Merkmale treffen analog auf jede Bearbeitungsstation der Mehrzahl von Bearbeitungsstationen zu. Dadurch kann der Vorgang des Einlegens des bahnförmigen Verpackungsmaterials in die Verpackungsmaschine vollständig automatisiert werden.

Es versteht sich, dass das bahnförmige Verpackungsmaterial mittels der Handhabungsvorrichtung aber auch nur in eine Bearbeitungsstation oder eine beliebige Teilmenge der Mehrzahl von Bearbeitungsstationen eingeführt werden kann.

Zum Einführen des freien Endabschnitts des bahnförmigen Verpackungsmaterials zumindest in die erste Bearbeitungsstation steht die Halteeinrichtung zumindest zeitweise mit dem Endabschnitt des bahnförmigen Verpackungsmaterials in Eingriff, wobei die Längsrichtung der Halteeinrichtung senkrecht zur Längsrichtung des bahnförmigen Verpackungsmaterials bzw. parallel zur Querrichtung des bahnförmigen Verpackungsmaterials ausgerichtet ist. Dadurch bewirkt die Krümmung des Kontaktbereichs der Halteeinrichtung eine Wölbung des bahnförmigen Verpackungsmaterials in Querrichtung des bahnförmigen Verpackungsmaterials. Der freie Endabschnitt des bahnförmigen Verpackungsmaterials kann dann in Längsrichtung des bahnförmigen Verpackungsmaterials von der Halteeinrichtung hervorstehen, um einfach in die erste Bearbeitungsstation eingeführt werden zu können.

Es kann erforderlich sein, dass die Handhabungsvorrichtung den freien Endabschnitt des bahnförmigen Verpackungsmaterials bis zur ersten Bearbeitungsstation führt und ihn in diese einführt, dann aber den freien Endabschnitt freigeben muss und die Halteeinrichtung den freien Endabschnitt erst hinter der ersten Bearbeitungsstation wieder erfasst. Die Halteeinrichtung steht dann nicht dauerhaft in Eingriff mit dem Endabschnitt des bahnförmigen Verpackungsmaterials sondern nur zeitweise. Es sind aber auch Ausführungsformen denkbar, in denen die Halteeinrichtung zusammen mit dem freien Endabschnitt des Verpackungsmaterials durch die Bearbeitungsstation hindurchgeführt wird, sodass es dann nicht erforderlich ist, den Endabschnitt freizugeben.

In einer bevorzugten Ausführungsform erstreckt sich der Kontaktbereich der Halteeinrichtung in deren Längsrichtung über zumindest 30 %, mehr bevorzugt über zumindest 60 %, noch mehr bevorzugt über 100 % einer Breite des bahnförmigen Verpackungsmaterials in Querrichtung des bahnförmigen Verpackungsmaterials.

Der Kontaktbereich kann sich definitionsgemäß über höchstens 100% der Breite des bahnförmigen Verpackungsmaterials erstrecken. Dies ist besonders vorteilhaft, um das bahnförmige Verpackungsmaterial über die gesamte Breite entsprechend der Krümmung des Kontaktbereichs zu wölben.

Es versteht sich, dass sich die Halteeinrichtung in Längsrichtung auch über mehr als die Breite des bahnförmigen Verpackungsmaterials erstrecken kann. Um möglichst ungehindert durch die Verpackungsmaschine bewegt werden zu können, ist die Länge der Halteeinrichtung in Längsrichtung jedoch vorzugsweise kleiner als die Breite des bahnförmigen Verpackungsmaterials. Je nach Bearbeitungsstation und Ausbildung der Verpackungsmaschine kann es aber auch von Vorteil sein, wenn sich der Kontaktbereich und die Halteeinrichtung in Längsrichtung der Halteeinrichtung über weniger als die Breite des bahnförmigen Verpackungsmaterials erstrecken, sodass ein seitlicher Überstand des Verpackungsmaterials über den Kontaktbereich bzw. die Halteeinrichtung in Querrichtung des Verpackungsmaterials erzielt wird.

Steht die Halteeinrichtung mit dem Endabschnitt des bahnförmigen Verpackungsmaterials in Eingriff, beträgt ein Abstand zwischen einem voraneilenden Rand des bahnförmigen Verpackungsmaterials und der Halteeinrichtung bzw. dem Kontaktbereich der Halteeinrichtung vorzugsweise zwischen 0 mm und 200 mm, bevorzugt zwischen 5 mm und 100 mm, mehr bevorzugt zwischen 40 mm und 60 mm. Der Abstand ist parallel zur Längsrichtung des bahnförmigen Verpackungsmaterials und senkrecht zum vorauseilenden Rand des bahnförmigen Verpackungsmaterials definiert.

Je größer der Abstand zwischen dem voraneilenden Rand des bahnförmigen Verpackungsmaterials und der Halteeinrichtung bzw. dem Kontaktbereich ist, desto größer ist der Überstand des freien Endabschnitts des bahnförmigen Verpackungsmaterials von der Halteeinrichtung und umso weiter kann die Handhabungsvorrichtung das bahnförmige Verpackungsmaterial in die erste Bearbeitungsstation einführen.

Mit zunehmendem Abstand nimmt aber auch das Eigengewicht des überstehenden, freien Endabschnitts des bahnförmigen Verpackungsmaterials zu und es ist eine größere Zugkraft in Querrichtung des Verpackungsmaterials und somit eine stärkere Krümmung des Kontaktbereichs erforderlich, um die erforderliche Stabilität des freien Endabschnitts und somit das Hervorstehen des Endabschnitts von der Halteeinrichtung zu bewirken.

In einer besonders bevorzugten Ausgestaltung umfasst die Verpackungsmaschine weiterhin einen Roboter, an dem die Handhabungsvorrichtung gelagert ist und der dazu eingerichtet ist, den Endabschnitt des bahnförmigen Verpackungsmaterials mittels der Handhabungsvorrichtung in die erste Bearbeitungsstation einzuführen. Dadurch kann der Prozess des Einlegens des bahnförmigen Verpackungsmaterials in die Verpackungsmaschine zumindest teilweise automatisiert werden.

Die Handhabungsvorrichtung ist bevorzugt lösbar mit dem Roboter verbunden, um einfach austauschbar zu sein. Dadurch kann die Handhabungsvorrichtung durch eine an ein anderes bahnförmiges Verpackungsmaterial angepasste Handhabungsvorrichtung oder ein anderes Werkzeug ausgetauscht werden.

Umfasst die Verpackungsmaschine die Mehrzahl von Bearbeitungsstationen mit der ersten und zumindest der zweiten Bearbeitungsstation, ist der Roboter bevorzugt dazu eingerichtet, den Endabschnitt des bahnförmigen Verpackungsmaterials in jede Bearbeitungsstation der Mehrzahl von Bearbeitungsstationen einzuführen.

Der Roboter ist vorzugsweise dazu eingerichtet, die Handhabungsvorrichtung zumindest horizontal und vertikal durch die Verpackungsmaschine zu bewegen. Vorzugsweise kann der Roboter die Handhabungsvorrichtung auch um eine Längsachse der Halteeinrichtung drehen. Diese Bewegung kann aber z.B. auch durch einen separaten Antrieb und eine drehbare Lagerung der Halteeinrichtung an einer anderen Komponente der Handhabungsvorrichtung ermöglicht werden. Der Roboter kann beispielsweise als Mehr-Achs-Roboter oder Portalroboter ausgebildet sein.

Die Ausbildung und Reichweite des Roboters hängt im Wesentlichen von der Dimension der Verpackungsmaschine sowie von den Aufgaben ab, die der Roboter übernimmt. Führt der Roboter beispielsweise den freien Endabschnitt des bahnförmigen Verpackungsmaterials ausgehend von einer Vorratsrolle des Verpackungsmaterials lediglich in eine oder mehrere unmittelbar benachbarte Bearbeitungsstationen ein, kann es ausreichen, wenn der Roboter stationär angeordnet ist. Dies ist auch der Fall, wenn die Verpackungsmaschine verhältnismäßig klein ist bzw. sich alle Bearbeitungsstationen innerhalb der üblichen Reichweite des Roboters befinden.

Besonders bevorzugt ist der Roboter jedoch entlang der Verpackungsmaschine verfahrbar. Dadurch kann der Roboter auch bei größeren Verpackungsmaschinen verwendet werden bzw. größere Lasten aufnehmen, da Hebelkräfte reduziert werden können, wenn der Roboter weniger weit ausgefahren werden muss.

Vorzugsweise ist der Roboter in einer Richtung entlang der Verpackungsmaschine verfahrbar, die vom Eingangsbereich der Verpackungsmaschine zum Ausgangsbereich der Verpackungsmaschine definiert ist und sich bevorzugt horizontal erstreckt.

Dass der Roboter verfahrbar ist, bedeutet, dass der gesamte Roboter samt seiner Basis entlang der Verpackungsmaschine als eine Einheit bewegt werden kann. Um dies möglichst einfach umzusetzen, ist der Roboter bevorzugt linear verfahrbar.

Weitere Merkmale und Vorteile der vorliegenden Erfindung ergeben sich aus der nachfolgenden Beschreibung unter Bezugnahme auf die beigefügten Zeichnungen.
- Fig. 1: zeigt in einer perspektivischen Ansicht schematisch eine Verpackungsmaschine mit einer Handhabungsvorrichtung.
- Fig. 2: zeigt eine Seitenansicht einer Halteeinrichtung der Handhabungsvorrichtung.
- Fig. 3: zeigt eine perspektivische Ansicht der Halteeinrichtung nach Fig. 2.
- Fig. 4a-4d: zeigen in einer Seiteneinsicht schematisch Schritte des erfindungsgemäßen Verfahrens.
- Fig. 5a-5b: zeigen in einer Seiteneinsicht schematisch Schritte des erfindungsgemäßen Verfahrens.
- Fig. 6a-6c: zeigen in einer Seitenansicht schematisch das Abrollen einer Halteeinrichtung nach Fig. 2 auf einem bahnförmigen Verpackungsmaterial.

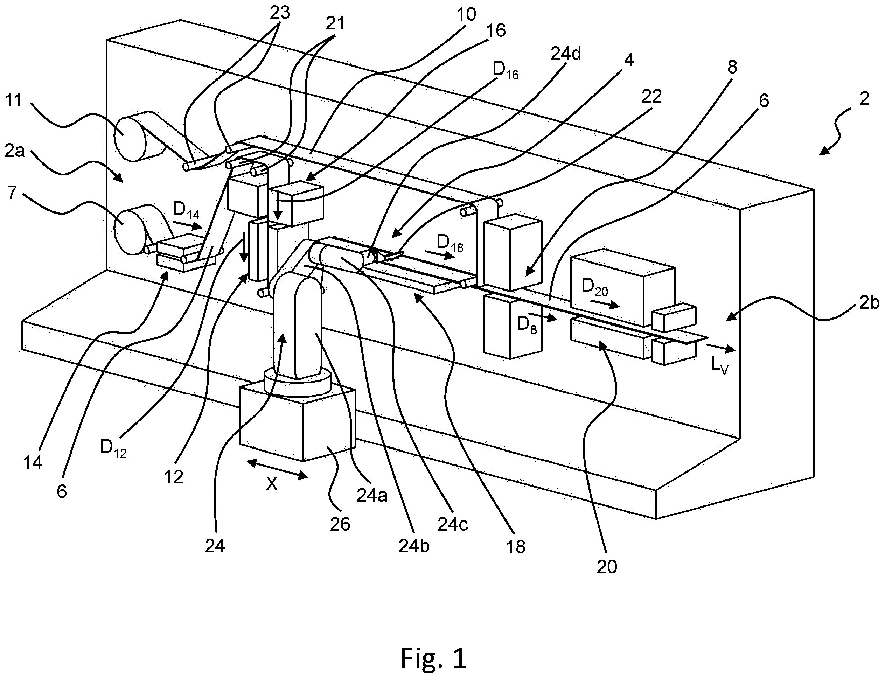

In Fig. 1 ist eine Verpackungsmaschine 2 mit einer Handhabungsvorrichtung 4 in einer perspektivischen Ansicht dargestellt. In der dargestellten Ausführungsform ist die Verpackungsmaschine 2 besonders bevorzugt als Blistermaschine ausgebildet, auch wenn die folgenden Ausführungen nicht darauf zu beschränken sind.

Die Verpackungsmaschine 2 ist mit einem biegeschlaffen, bahnförmigen Verpackungsmaterial 6, das hier durch eine Formfolienbahn gebildet sein kann, ausgestattet und umfasst zumindest eine erste Bearbeitungsstation 8 zum Bearbeiten des bahnförmigen Verpackungsmaterials 6 in der Verpackungsmaschine 2. Das bahnförmige Verpackungsmaterial 6 kann in einem Eingangsbereich 2a der Verpackungsmaschine 2 zum Beispiel auf einer Vorratsrolle 7 bereitgestellt sein. Das bahnförmige Verpackungsmaterial 6 weist eine Längsrichtung L_{V} auf.

Die Verpackungsmaschine 2 kann neben dem bahnförmigen Verpackungsmaterial 6 mit einem weiteren bahnförmigen Verpackungsmaterial 10 ausgestattet sein, das hier durch eine Deckfolienbahn gebildet sein kann. Auch das weitere bahnförmige Verpackungsmaterial 10 ist im Bereich des Eingangsbereichs 2a der Verpackungsmaschine 2 auf einer Vorratsrolle 11 bereitgestellt.

Vorzugsweise umfasst die Verpackungsmaschine 2 eine Mehrzahl von Bearbeitungsstationen, die die erste Bearbeitungsstation 8 und zumindest eine zweite Bearbeitungsstation 12 umfasst und die zur Bearbeitung des bahnförmigen Verpackungsmaterials 6 und im vorliegenden Fall auch des weiteren bahnförmigen Verpackungsmaterials 10 eingerichtet ist.

Die Mehrzahl von Bearbeitungsstationen umfasst zum Beispiel eine Schneid- und Klebevorrichtung 14 zum Verbinden aufeinander folgender Materialbahnen des Verpackungsmaterials 6, eine Heizvorrichtung 16 zum Erwärmen des bahnförmigen Verpackungsmaterials 6, die zweite Bearbeitungsstation 12, die hier z.B. als Formvorrichtung zum Formen von Näpfen in das bahnförmige Verpackungsmaterial 6 ausgebildet ist, eine Füllvorrichtung 18 zum Befüllen der Näpfe mit medizinischen oder pharmazeutischen Produkten, die erste Bearbeitungsstation 8, die hier z.B. als Siegelvorrichtung zum Siegeln der Deckfolienbahn an die Formfolienbahn ausgebildet ist, sowie eine Stanzvorrichtung 20 zum Ausstanzen einzelner Blisterpackungen.

Zum Bearbeiten des Weiteren bahnförmigen Verpackungsmaterials 10 kann die Verpackungsmaschine 2 ebenfalls eine Mehrzahl von Bearbeitungsstationen umfassen, die zum Beispiel die erste Bearbeitungsstation 8 und die Stanzvorrichtung 20 umfasst. Jede Bearbeitungsstation der Mehrzahl von Bearbeitungsstationen 8, 12, 14, 16, 18, 20 weist eine Durchlaufrichtung auf, in der das jeweilige Verpackungsmaterial 6, 10 die Bearbeitungsstation durchläuft und die jeweils durch den Pfeil D ergänzt um das Bezugszeichen der jeweiligen Bearbeitungsstation gekennzeichnet ist. Es versteht sich, dass die Verpackungsmaschine grundsätzlich eine beliebige Anzahl von Bearbeitungsstationen aufweisen kann und die erste und die zweite Bearbeitungsstation 8, 12 nicht auf die bezüglich Fig. 1 angeführten Beispiele beschränkt sind.

Im dargestellten Zustand ist das bahnförmige Verpackungsmaterial 6 bereits vollständig in die Verpackungsmaschine 2 eingelegt. D. h., dass das bahnförmige Verpackungsmaterial 6 durch alle erforderlichen Bearbeitungsstationen 8, 12, 14, 16, 18, 20 und um alle erforderlichen Führungs- und Umlenkelemente 21 geführt ist. Auch das weitere bahnförmige Verpackungsmaterial 10 ist bereits vollständig in die Verpackungsmaschine 2 eingelegt und durch die erforderlichen Bearbeitungsstationen 8, 20 sowie um die erforderlichen Führungs- und Umlenkelemente 23 geführt.

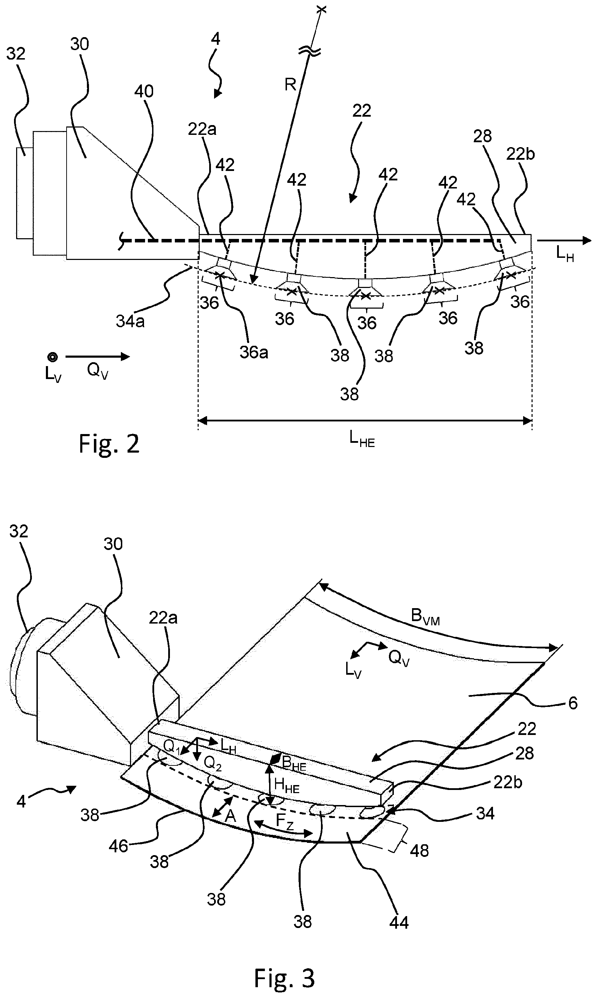

Um das Einlegen des bahnförmigen Verpackungsmaterials 6, 10 zumindest teilweise zu automatisieren ist die Handhabungsvorrichtung 4 zum Einführen eines freien Endabschnitts (siehe Fig. 3) des bahnförmigen Verpackungsmaterials 6, 10 in die erste Bearbeitungsstation 8 und, falls gewünscht, in weitere Bearbeitungsstationen der Mehrzahl von Bearbeitungsstationen 12, 14, 16, 18, 20 eingerichtet. Zu diesem Zweck umfasst die Handhabungsvorrichtung 4 eine Halteeinrichtung 22, die zum Erfassen des bahnförmigen Verpackungsmaterials 6, 10 eingerichtet ist und unter Bezugnahme auf die Fig. 2-4 näher beschrieben wird.

Es ist weiterhin von Vorteil, wenn die Verpackungsmaschine 2 einen Roboter 24 umfasst, der die Handhabungsvorrichtung 4 trägt, die am Roboter 24 gelagert ist. Der Roboter 24 ist dazu geeignet, die Handhabungsvorrichtung 4 mit der Halteeinrichtung 22 entlang eines für das bahnförmige Verpackungsmaterial 6, 10 vorgegebenen Pfads durch die Verpackungsmaschine 2 zu führen und die Halteeinrichtung 22 dabei je nach Bedarf zu bewegen. Soll der Roboter 24 nur Bereiche der Verpackungsmaschine 2 abdecken, die innerhalb der Reichweite seiner Arme 24a-d liegen, kann der Roboter 24 stationär angeordnet sein. Vorzugsweise ist der Roboter 24 jedoch entlang der Verpackungsmaschine 2 verfahrbar, insbesondere linear verfahrbar, wie durch den Pfeil X in Fig. 1 gekennzeichnet. Beispielsweise kann ein Sockel 26, der den gesamten Roboter 24 trägt, hierzu beweglich gelagert sein. Bevorzugt erstreckt sich der Bewegungsbereich des Roboters 24 so weit entlang der Verpackungsmaschine 2, dass seine Reichweite die Verpackungsmaschine 2 zwischen deren Eingangsbereich 2a und deren Ausgangsbereich 2b abdeckt. Dabei ist es besonders vorteilhaft, wenn zumindest die Mehrzahl von Bearbeitungsstationen 8, 12, 14, 16, 18, 20 in Reichweite des Roboters 24 liegen.

Die Handhabungsvorrichtung 4 mit der Halteeinrichtung 22 ist in Fig. 2 in einer Seitenansicht und in Fig. 3 in einer perspektivischen Ansicht dargestellt, wobei in Fig. 3 zudem ein Teil des bahnförmigen Verpackungsmaterials 6 zu sehen ist. Es versteht sich, dass die Ausführungen analog auch auf ein von der Halteeinrichtung erfasstes weiteres bahnförmiges Verpackungsmaterial 10 zutreffen.

Die Halteeinrichtung 22 erstreckt sich weiter in eine Längsrichtung L_{H} der Halteeinrichtung 22 als in Querrichtungen Q₁, Q₂ der Halteeinrichtung 22. Die Querrichtungen Q₁, Q₂ der Halteeinrichtung 22 sind senkrecht zur Längsrichtung L_{H} der Halteeinrichtung 22 sowie senkrecht zueinander ausgerichtet. Bevorzugt weist die Halteeinrichtung 22 einen im Wesentlichen stab- oder rohrförmigen Körper 28 auf, der sich entsprechend weiter in Längsrichtung L_{H} der Halteeinrichtung 22 als in die Querrichtungen Q₁, Q₂ der Halteeinrichtung 22 erstreckt. Eine Länge L_{HE} der Halteeinrichtung 22 ist in Längsrichtung L_{H} der Halteeinrichtung 22 vom ersten Ende 22a zum zweiten Ende 22b definiert. Eine Breite B_{HE} der Halteeinrichtung 22 ist parallel zur Querrichtung Q, und eine Höhe H_{HE} ist parallel zur Querrichtung Q₂ definiert. Für die Breite B_{HE} und die Höhe H_{HE} ist jeweils die in die entsprechende Richtung gerichtete maximale Dimension der Halteeinrichtung 22 maßgeblich.

Der Körper 28 der Halteeinrichtung 22 kann sich in Längsrichtung L_{H} von einem Gehäuse 30 der Handhabungsvorrichtung 4 aus erstrecken, das beispielsweise eine Steuerung und eine Medienversorgung aufnehmen kann. In der dargestellten Ausführungsform weist die Halteeinrichtung 22 ein erstes Ende 22a und ein dem ersten Ende 22a in Längsrichtung L_{H} gegenüberliegendes zweites Ende 22b auf. Das erste Ende 22a ist bevorzugt fest mit dem Gehäuse 30 verbunden, während das zweite Ende 22b ein freies Ende der Halteeinrichtung 22 bildet.

Weiterhin umfasst die Handhabungsvorrichtung 4 eine Kupplung 32 zum Verbinden der Handhabungsvorrichtung 4 mit einer komplementären Kupplung am Roboter 24, insbesondere an einem freien Ende eines Roboterarms 24d. Die Kupplung 32 der Handhabungsvorrichtung 4 und die komplementäre Kupplung am Roboter 24 bilden bevorzugt ein Schnellwechselsystem.

Die Halteeinrichtung 22 weist ferner einen Kontaktbereich 34 auf, der durch zumindest eine Kontaktstelle 36 zum Kontaktieren des bahnförmigen Verpackungsmaterials 6 definiert ist. Der Kontaktbereich 34 weist wiederum in Längsrichtung L_{H} eine Krümmung auf, die sich vorzugsweise in Längsrichtung L_{H} der Halteeinrichtung 22 über den gesamten Kontaktbereich 34 erstreckt. D. h., dass der Kontaktbereich 34 vollständig gekrümmt ist.

Die Halteeinrichtung 22 kann eine Mehrzahl von punktuellen Kontaktstellen (Kontaktpunkte) zum bahnförmigen Verpackungsmaterial 6 aufweisen, die den Kontaktbereich 34 definieren und in einer Querschnittsansicht parallel zur Längsrichtung L_{H} der Halteeinrichtung 22 und senkrecht zur Längsrichtung L_{V} des Verpackungsmaterials 6 auf einer entsprechend der Krümmung des Kontaktbereichs 34 gekrümmten Linie liegen. Dies ist in Fig. 2 durch Kontaktpunkte, von denen stellvertretend einer mit dem Bezugszeichen 36a gekennzeichnet ist, und die gestrichelte, gekrümmte Linie 34a angedeutet.

Die Halteeinrichtung 22 kann auch einen linienförmigen Kontakt (Kontaktlinie) zum bahnförmigen Verpackungsmaterial 6 aufweisen, die dann in der zuvor definierten Querschnittsansicht selbst eine entsprechende Krümmung aufweist. Analoges gilt für einen flächigen Kontakt (Kontaktfläche) zum bahnförmigen Verpackungsmaterial. Ein linienförmiger oder flächiger Kontakt kann sich durchgängig entlang des Kontaktbereichs 34 erstrecken oder, wie dargestellt, aus mehreren Kontaktstellen 36 gebildet sein.

In der dargestellten Ausführungsform weist die Halteeinrichtung 22 eine Mehrzahl von Kontaktstellen 36 auf, die jeweils linienförmigen oder flächig ausgebildet sein können, hier ringförmig geformt sind, und in Längsrichtung L_{H} der Halteeinrichtung 22 voneinander beabstandet sind. Die Mehrzahl von Kontaktstellen 36 liegt in der zuvor definierten Querschnittsansicht auf der entsprechend der Krümmung des Kontaktbereichs 34 gekrümmten Linie 34a.

Die Krümmung des Kontaktbereichs 34, die in Fig. 2 durch die gestrichelte Linie 34a veranschaulicht ist, kann durch eine quadratische Funktion definiert oder durch ein Kreissegment gebildet sein. Ein Krümmungsradius R ist entsprechend für die gekrümmte Linie 34a in Fig. 2 gekennzeichnet.

In der in den Fig. 2-4 dargestellten Ausführungsform ist die Halteeinrichtung 22 als Saugeinrichtung ausgebildet. Diese eignet sich besonders gut zum Handhaben sensibler Verpackungsmaterialien, wie zum Beispiel Folien, kann zum Erfassen bzw. Freigegeben des Verpackungsmaterials einfach aktiviert und deaktiviert werden und ist platzsparend ausgebildet.

Die Saugeinrichtung kann eine Mehrzahl von Saugnäpfen 38 umfassen, die vorzugsweise in Längsrichtung L_{H} der Halteeinrichtung 22 hintereinander angeordnet ist. Die Saugnäpfe 38 können unabhängig voneinander einzeln oder gruppenweise ansteuerbar sein, zum Beispiel indem sie jeweils mittels einer eigenen Leitung mit einer Unterdruckquelle, wie zum Beispiel einer Vakuumpumpe, in Fluidverbindung stehen. Die Saugnäpfe 38 können aber auch alle mit einer Leitung 40 im Inneren der Halteeinrichtung 22 verbunden sein, wie in Fig. 2 schematisch dargestellt. Hierzu kann in der Halteeinrichtung 22 eine Mehrzahl von Bohrungen 42 vorgesehen sein, die die Saugnäpfe 38 über die Leitung 40 mit einer Unterdruckquelle verbinden.

Bezugnehmend auf Fig. 3 erfasst die Halteeinrichtung 22 einen freien Endabschnitt 44 des bahnförmigen Verpackungsmaterials 6. Der freie Endabschnitt 44 des bahnförmigen Verpackungsmaterials 6 weist einen voraneilenden Rand 46 quer zur Längsrichtung L_{V} des bahnförmigen Verpackungsmaterials 6 auf. Eine breite des bahnförmigen Verpackungsmaterials ist in Fig. 3 durch das Bezugszeichen B_{VM} gekennzeichnet.

Steht die Halteeinrichtung 22 mit dem freien Endabschnitt 44 des bahnförmigen Verpackungsmaterials 6 in Eingriff, ist die Längsrichtung L_{H} der Halteeinrichtung 22 senkrecht zur Längsrichtung L_{V} des bahnförmigen Verpackungsmaterials 6 bzw. parallel zur Querrichtung Q_{V} des bahnförmigen Verpackungsmaterials 6 ausgerichtet.

Wie zu erkennen ist, bewirkt die Krümmung des Kontaktbereichs 34 der Halteeinrichtung 22, dass das von der Halteeinrichtung 22 erfasste bahnförmige Verpackungsmaterial 6 in Querrichtung Q_{V} des Verpackungsmaterials 6 entsprechend der Krümmung des Kontaktbereichs 34 gewölbt ist. Dadurch wird im bahnförmigen Verpackungsmaterial 6 eine Zugkraft erzeugt, die in Fig. 3 durch den Pfeil F_{Z} gekennzeichnet ist und quer zur Längsrichtung L_{V} entlang der Krümmung bzw. Wölbung gerichtet ist.

Die Zugkraft F_{Z} hat wiederum eine gewisse Stabilität des freien Endabschnitts 44 des bahnförmigen Verpackungsmaterials 6 zur Folge, wodurch erreicht wird, dass der freie Endabschnitt 44 in Längsrichtung L_{V} von der Halteeinrichtung 22 hervorsteht und nicht in Richtung der Gewichtskraft nach unten hängt. Der von der Halteeinrichtung 22 hervorstehende Teil des freien Endabschnitts 44 des bahnförmigen Verpackungsmaterials 6 wird auch als Überstand 48 bezeichnet. Dieser Überstand 48 kann nun mittels der Handhabungsvorrichtung 4 in zumindest eine Bearbeitungsstation der Mehrzahl von Bearbeitungsstationen 8, 12, 14, 16, 18, 20 eingeführt werden.

Ein Abstand A ist zwischen dem voraneilenden Rand 46 des bahnförmigen Verpackungsmaterials 6 und der Halteeinrichtung 22 parallel zur Längsrichtung L_{V} des bahnförmigen Verpackungsmaterials 6 definiert. Der Abstand A gibt die Größe des Überstands 48 an. Je stärker die Krümmung des Kontaktbereichs 34 und somit die Wölbung des bahnförmigen Verpackungsmaterials 6 im freien Endabschnitt 44 bzw., je größer die Zugkraft F_{Z}, desto größer kann der Abstand A gewählt werden, da damit eine größere Stabilität des freien Endabschnitts 44 und somit des Überstands 48 einhergeht.

Das erfindungsgemäße Verfahren zum Einlegen des biegeschlaffen, bahnförmigen Verpackungsmaterials 6 in die Verpackungsmaschine 2 wird nachfolgend unter Bezugnahme auf die Figuren 1 bis 6 beschrieben. Das Verfahren umfasst zunächst das Bereitstellen des bahnförmigen Verpackungsmaterials 6, vorzugsweise auf der Vorratsrolle 7 im Eingangsbereich 2a der Verpackungsmaschine 2 (s. Fig. 1).

Es folgt das Erfassen des bahnförmigen Verpackungsmaterials 6 mittels der Handhabungsvorrichtung 4, vorzugsweise zunächst an der Vorratsrolle 7, wobei der freie Endabschnitt 44 des bahnförmigen Verpackungsmaterials 6 in Querrichtung Q_{V} des bahnförmigen Verpackungsmaterials 6 gewölbt ist und von der Handhabungsvorrichtung 4 hervorsteht, wie in Fig. 3 dargestellt. Dies wird insbesondere dadurch erreicht, dass der freie Endabschnitt 44 des bahnförmigen Verpackungsmaterials 6 durch die Halteeinrichtung 22 erfasst wird, deren Kontaktbereich 34 eine Krümmung aufweist, wie unter Bezugnahme auf Fig. 2 und Fig. 3 beschrieben.

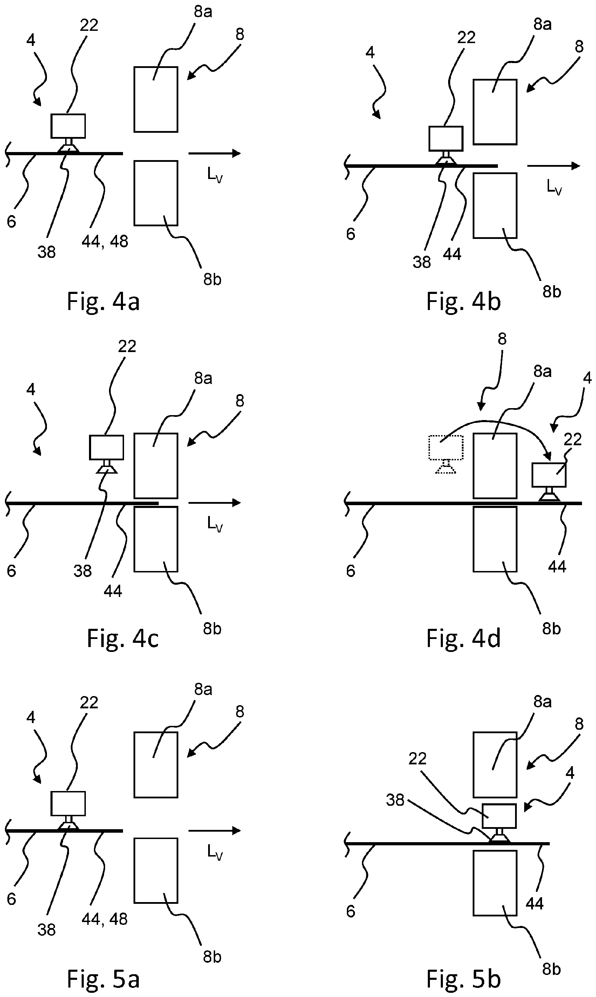

Der erfasste freie Endabschnitt 44 des bahnförmigen Verpackungsmaterials 6 wird dann mittels der Handhabungsvorrichtung 4 an zumindest die erste Bearbeitungsstation 8 der Verpackungsmaschine 2 herangeführt, wie in Fig. 4a und Fig. 5a dargestellt, und anschließend in die erste Bearbeitungsstation 8 eingeführt (s. Fig. 4b, Fig. 5b). Zum Beispiel wird der freie Endabschnitt 44 in einen Spalt zwischen einem oberen und einem unteren Werkzeug 8a, 8b der ersten Bearbeitungsstation 8 eingeführt. Besonders vorteilhaft ist, dass der Überstand 48 des freien Endabschnitts 44 stabil von der Halteeinrichtung 22 hervorsteht und dadurch einfach in die erste Bearbeitungsstation 8 eingeführt werden kann.

Gemäß der Ausführungsform nach Fig. 5a, 5b können die Handhabungsvorrichtung 4, vor allem deren Halteeinrichtung 22, und der freie Endabschnitt 44 des bahnförmigen Verpackungsmaterials 6 gemeinsam durch die erste Bearbeitungsstation 8 und ggf. weitere Bearbeitungsstationen der Mehrzahl von Bearbeitungsstationen hindurchgeführt werden (s. Fig. 5b), nachdem der freie Endabschnitt 44 in die jeweilige Bearbeitungsstation eingeführt wurde (s. Fig. 5a). Dies ist dann möglich, wenn sich die jeweilige Bearbeitungsstation weit genug öffnen lässt bzw. ohnehin ausreichend Platz zum Hindurchführen der Halteeinrichtung 22 vorhanden ist.

Vor allem wenn dies nicht der Fall ist, ist es gemäß Fig. 4a-4c bevorzugt, dass der bereits nach Fig. 4b eingeführte Endabschnitt 44 des bahnförmigen Verpackungsmaterials 6 durch die jeweilige Bearbeitungsstation erfasst wird und anschließend durch die Handhabungsvorrichtung 4 freigegeben wird, wie in Fig. 4c dargestellt. Beispielsweise wird der freie Endabschnitt hierzu durch das obere und das untere Werkzeug 8a, 8b geklemmt. Es wird dann nur das bahnförmige Verpackungsmaterial 6 durch die Bearbeitungsstation hindurchgeführt, während die Handhabungsvorrichtung 4 um die erste Bearbeitungsstation 8 herum geführt werden kann, wie in Fig. 4d angedeutet. Hinter der ersten Bearbeitungsstation 8 erfasst die Handhabungsvorrichtung 4 dann den freien Endabschnitt 44 des bahnförmigen Verpackungsmaterials 6 erneut (Fig. 4d).

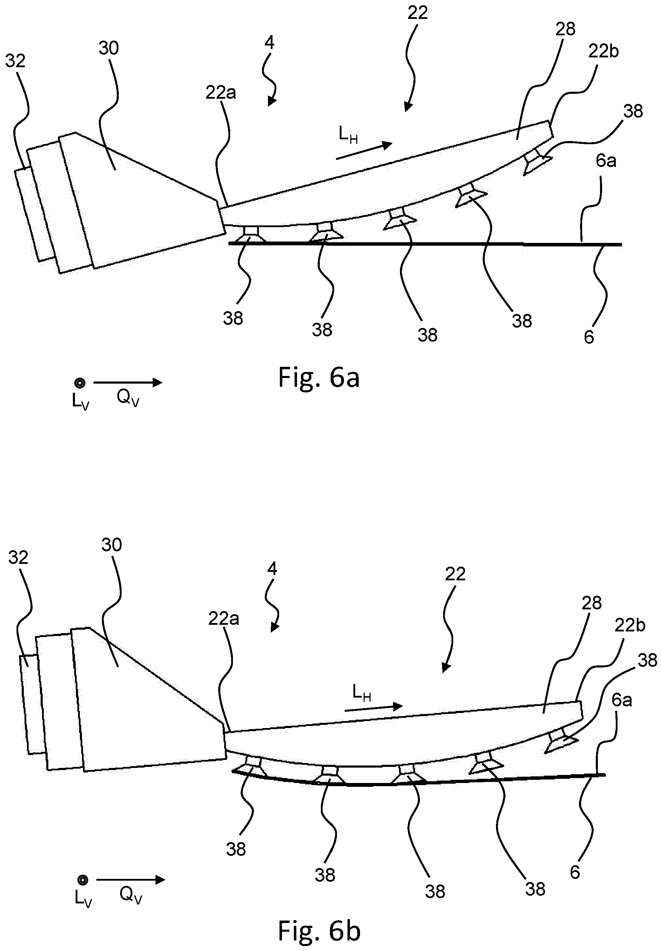

In den Fig. 6a-6c ist das Erfassen des bahnförmigen Verpackungsmaterials 6 durch die Halteeinrichtung 22 der Handhabungsvorrichtung 4 näher beschrieben. In dieser bevorzugten Ausführungsform umfasst das Erfassen des bahnförmigen Verpackungsmaterials 6 mittels der Handhabungsvorrichtung 4 das Abrollen der Halteeinrichtung 22 auf einer Oberfläche 6a des bahnförmigen Verpackungsmaterials 6 in Querrichtung Q_{V} des bahnförmigen Verpackungsmaterials 6 entlang der Krümmung des Kontaktbereichs 34. Dadurch wird erreicht, dass das bahnförmige Verpackungsmaterial 6 sauber und faltenfrei erfasst und dabei eine gut definierbare Zugkraft F_{Z} im bahnförmigen Verpackungsmaterial 6 erzeugt wird.

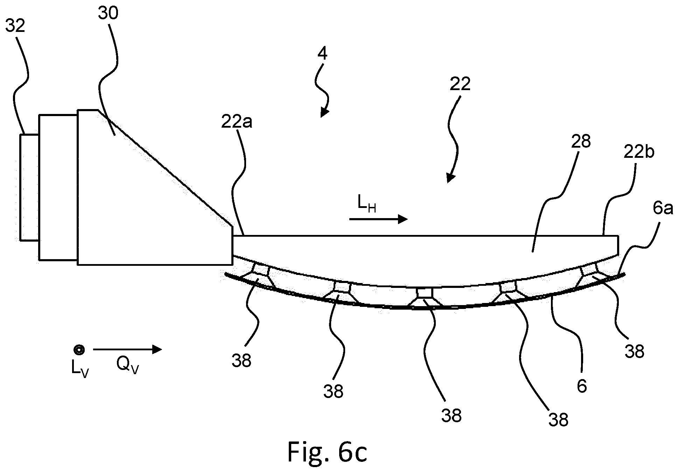

Durch das Abrollen erfasst der Kontaktbereich 34 der Halteeinrichtung 22 das Verpackungsmaterial 6 zunächst im Bereich des ersten Endes 22a der Halteeinrichtung 22 (s. Fig. 6a) und während des Abrollens entlang der Krümmung des Kontaktbereichs 34 zunehmend (s. Fig. 6b), bis zum Bereich des zweiten Endes 22b der Halteeinrichtung 22 (s. Fig. 6c).

Ist die Halteeinrichtung 22 als Saugeinrichtung ausgebildet, wie dargestellt, führt dies dazu, dass in Längsrichtung L_{H} der Halteeinrichtung 22 ein Saugnapf 38 nach dem anderen das bahnförmige Verpackungsmaterial 6 erfasst. So erfasst in Fig. 6a zunächst ein Saugnapf 38 der Mehrzahl von Saugnäpfen 38 das bahnförmige Verpackungsmaterial 6, der dem ersten Ende 22a der Halteeinrichtung 22 am nächsten ist. Ein in Längsrichtung L_{H} der Halteeinrichtung 22 folgender Saugnapf 38 kann dadurch bereits in unmittelbarer Nähe zur Oberfläche 6a des bahnförmigen Verpackungsmaterials angeordnet sein. Wie in Fig. 6b zu sehen ist, wird die Halteeinrichtung 22 weiter auf der Oberfläche 6A abgerollt, sodass im dargestellten Zustand die zwei nächsten Saugnäpfe 38 in Eingriff mit dem bahnförmigen Verpackungsmaterials 6 stehen. Es ist bereits zu erkennen, dass das bahnförmige Verpackungsmaterial 6 dabei zwischen den Saugnäpfen 38 gewölbt wird, die das Verpackungsmaterial 6 bereits erfasst haben.

Durch weiteres Abrollen werden auch die übrigen Saugnäpfe 38 in Eingriff mit dem bahnförmigen Verpackungsmaterials 6 gebracht, wie in Fig. 6c dargestellt. In diesem Zustand hat die Halteeinrichtung 22 das bahnförmige Verpackungsmaterial 6 vollständig erfasst und dieses ist entlang der Krümmung des Kontaktbereichs 34 gewölbt. Die Figuren 3 und 6c zeigen denselben Zustand des von der Halteeinrichtung 22 erfassten bahnförmigen Verpackungsmaterials 6 in verschiedenen Ansichten.

Es versteht sich, dass die in Zusammenhang mit der Halteeinrichtung 22 beschriebenen Schritte analog auch auf andere Halteeinrichtungen übertragbar sind, die einen gekrümmten Kontaktbereich zum Erfassen des bahnförmigen Verpackungsmaterials aufweisen.

Ebenso treffen die hierin beschriebenen Verfahrensschritte analog auf das Handhaben des weiteren bahnförmigen Verpackungsmaterials 10 zu. Da das Verfahren bevorzugt durch eine Handhabungsvorrichtung 4 bzw. eine Verpackungsmaschine 2, die eine solche umfasst, durchgeführt wird, sind alle bezüglich der Handhabungsvorrichtung 4 und der Verpackungsmaschine 2 beschriebenen Merkmale analog auf das Verfahren übertragbar.

## Patentansprüche

1. Verfahren zum Einlegen eines bahnförmigen Verpackungsmaterials (6, 10) in eine Verpackungsmaschine (2) mit den folgenden Schritten:
Bereitstellen des bahnförmigen Verpackungsmaterials (6, 10);
Erfassen des bahnförmigen Verpackungsmaterials (6, 10) mittels einer Handhabungsvorrichtung (4), wobei ein freier Endabschnitt (44) des Verpackungsmaterials (6, 10) in einer Querrichtung (Q_{V}) des Verpackungsmaterials (6, 10) gewölbt ist und von der Handhabungsvorrichtung (4) hervorsteht; und
Einführen des freien Endabschnitts (44) des Verpackungsmaterials (6, 10) in eine erste Bearbeitungsstation (8) der Verpackungsmaschine (2) mittels der Handhabungsvorrichtung (4).

2. Verfahren nach Anspruch 1, **dadurch gekennzeichnet, dass** es weiterhin folgende Schritte umfasst:
Erfassen des eingeführten Endabschnitts (44) des Verpackungsmaterials (6, 10) durch die erste Bearbeitungsstation (8) nach dem Einführen des freien Endabschnitts (44) des Verpackungsmaterials (6, 10) in die erste Bearbeitungsstation (8);
Freigeben des freien Endabschnitts (44) des Verpackungsmaterials (6, 10) durch die Handhabungsvorrichtung (4) vor der ersten Bearbeitungsstation (8) nach dem Erfassen des freien Endabschnitts (44) durch die erste Bearbeitungsstation (8);
Hindurchführen des Verpackungsmaterials (6, 10) durch die erste Bearbeitungsstation (8);
erneutes Erfassen des freien Endabschnitts (44) des Verpackungsmaterials (6, 10) mittels der Handhabungsvorrichtung (4) hinter der ersten Bearbeitungsstation (8).

3. Verfahren nach Anspruch 1, **dadurch gekennzeichnet, dass** es weiterhin folgenden Schritt umfasst:
gemeinsames Hindurchführen des freien Endabschnitts (44) des Verpackungsmaterials (6, 10) und der Handhabungsvorrichtung (4) durch die erste Bearbeitungsstation (8).

4. Verfahren nach einem der Ansprüche 1 bis 3, **dadurch gekennzeichnet, dass** die Verpackungsmaschine (2) eine Mehrzahl von Bearbeitungsstationen (8, 12, 14, 16, 18, 20) umfasst, die die erste Bearbeitungsstation (8) und zumindest eine zweite Bearbeitungsstation (12) umfasst, und dass das Verfahren weiterhin das Einführen des freien Endabschnitts (44) des Verpackungsmaterials (6, 10) in jede Bearbeitungsstation (8, 12, 14, 16, 18, 20) der Mehrzahl von Bearbeitungsstationen (8, 12, 14, 16, 18, 20) umfasst.

5. Verfahren nach einem der vorhergehenden Ansprüche, **dadurch gekennzeichnet, dass** die Handhabungsvorrichtung (4) eine Handhabungsvorrichtung (4) zum Handhaben von bahnförmigem Verpackungsmaterial (6, 10) ist, wobei die Handhabungsvorrichtung (4) eine Halteeinrichtung (22) umfasst, die zum Erfassen des bahnförmigen Verpackungsmaterials (6, 10) eingerichtet ist, wobei sich die Halteeinrichtung (22) weiter in eine Längsrichtung (L_{H}) der Halteeinrichtung (22) als in zwei zueinander senkrechte Querrichtungen (Q₁, Q₂) der Halteeinrichtung (22) erstreckt, die jeweils senkrecht zur Längsrichtung (L_{H}) der Halteeinrichtung (22) ausgerichtet sind, und einen Kontaktbereich (34) aufweist, der durch zumindest eine Kontaktstelle (36) zum Kontaktieren des Verpackungsmaterials (6, 10) definiert ist, wobei der Kontaktbereich (34) in Längsrichtung (L_{H}) der Halteeinrichtung (22) eine Krümmung aufweist, wobei der Schritt des Erfassens des Verpackungsmaterials (6, 10) mittels der Handhabungsvorrichtung (4) umfasst:
Abrollen der Halteeinrichtung (22) auf einer Oberfläche (6a, 10a) des Verpackungsmaterials (6, 10) in der Querrichtung (Q_{V}) des Verpackungsmaterials (6, 10) entlang der Krümmung des Kontaktbereichs (34).

6. Verfahren nach Anspruch 5, **dadurch gekennzeichnet, dass** die Krümmung des Kontaktbereichs (34) durch eine quadratische Funktion definiert ist.

7. Verfahren nach Anspruch 5 oder 6, **dadurch gekennzeichnet, dass** die Krümmung des Kontaktbereichs (34) einen Krümmungsradius (R) aufweist, der zwischen 1 mm und 10000 mm, bevorzugt zwischen 1000 mm und 3000 mm, mehr bevorzugt zwischen 2200 mm und 2400 mm beträgt.

8. Verfahren nach einem der Ansprüche 5 bis 7, **dadurch gekennzeichnet, dass** die Halteeinrichtung (22) als eine Saugeinrichtung ausgebildet ist.

9. Verfahren nach einem der Ansprüche 5 bis 8, **dadurch gekennzeichnet, dass** die Halteeinrichtung (22) eine Mehrzahl von Kontaktstellen (36) zum Kontaktieren des Verpackungsmaterials (6, 10) umfasst.

10. Verfahren nach einem der Ansprüche 5 bis 9, **dadurch gekennzeichnet, dass** die Halteeinrichtung (22) zumindest zeitweise mit dem freien Endabschnitt (44) des Verpackungsmaterials (6, 10) in Eingriff steht, wobei die Längsrichtung (L_{H}) der Halteeinrichtung (22) senkrecht zur Längsrichtung (L_{V}) des Verpackungsmaterials (6, 10) und parallel zur Querrichtung (Q_{V}) des Verpackungsmaterials (6, 10) ausgerichtet ist.

11. Verfahren nach einem der Ansprüche 5 bis 10, **dadurch gekennzeichnet, dass** sich der Kontaktbereich (34) der Halteeinrichtung (22) über zumindest 30 %, bevorzugt über zumindest 60 %, mehr bevorzugt über 100 % einer Breite (B_{VM}) des Verpackungsmaterials (6, 10) in der Querrichtung (Q_{V}) des Verpackungsmaterials (6, 10) erstreckt.

12. Verfahren nach einem der Ansprüche 5 bis 11, **dadurch gekennzeichnet, dass** die Verpackungsmaschine (2) weiterhin einen Roboter (24) umfasst, an dem die Handhabungsvorrichtung (4) gelagert ist und der dazu eingerichtet ist, den freien Endabschnitt (44) des Verpackungsmaterials (6, 10) mittels der Handhabungsvorrichtung (4) in die erste Bearbeitungsstation (8) einzuführen.

13. Verfahren nach Anspruch 12, **dadurch gekennzeichnet, dass** der Roboter (24) entlang der Verpackungsmaschine (2) verfahrbar ist.

14. Verfahren nach einem der vorhergehenden Ansprüche, **dadurch gekennzeichnet, dass** der Schritt des Erfassens des Verpackungsmaterials (6, 10) mittels der Handhabungsvorrichtung (4) das Erzeugen einer Zugkraft (F_{Z}) im Verpackungsmaterial (6, 10) in der Querrichtung (Q_{V}) des Verpackungsmaterials (6, 10) umfasst, die mindestens 15 N, bevorzugt mindestens 45N und mehr bevorzugt mindestens 65 N beträgt.

## Claims

1. A method for placing a web-form packaging material (6, 10) in a packaging machine (2), comprising the steps of:
providing the web-form packaging material (6, 10);
gripping the web-form packaging material (6, 10) by means of a handling apparatus (4), wherein a free end portion (44) of the packaging material (6, 10) is arched in a transverse direction (Q_{V}) of the packaging material (6, 10) and projects out from the handling apparatus (4); and
introducing the free end portion (44) of the packaging material (6, 10) into a first processing station (8) of the packaging machine (2) by means of the handling apparatus (4).

2. The method according to claim 1, **characterized in that** it further comprises the steps of:
gripping the introduced end portion (44) of the packaging material (6, 10) by the first processing station (8) once the free end portion (44) of the packaging material (6, 10) has been introduced into the first processing station (8) ;
releasing the free end portion (44) of the packaging material (6, 10) by the handling apparatus (4) upstream of the first processing station (8) once the free end portion (44) has been gripped by the first processing station (8);
guiding the packaging material (6, 10) through the first processing station (8);
gripping the free end portion (44) of the packaging material (6, 10) again by means of the handling apparatus (4) downstream of the first processing station (8).

3. The method according to claim 1, **characterized in that** it further comprises the step of:
guiding the free end portion (44) of the packaging material (6, 10) and the handling apparatus (4) together through the first processing station (8).

4. The method according to one of claims 1 to 3, **characterized in that** the packaging machine (2) comprises a plurality of processing stations (8, 12, 14, 16, 18, 20), including the first processing station (8) and at least a second processing station (12), and **in that** the method also comprises the step of introducing the free end portion (44) of the packaging material (6, 10) into each processing station (8, 12, 14, 16, 18, 20) of the plurality of processing stations (8, 12, 14, 16, 18, 20).

5. The method according to one of the preceding claims, **characterized in that** the handling apparatus (4) is a handling apparatus (4) for handling web-form packaging material (6, 10), wherein the handling apparatus (4) comprises a holding device (22), which is configured for gripping the web-form packaging material (6, 10), wherein the holding device (22) extends further in a longitudinal direction (L_{H}) of the holding device (22) than in two mutually perpendicular transverse directions (Q₁, Q₂) of the holding device (22), the two transverse directions each being oriented perpendicularly in relation to the longitudinal direction (L_{H}) of the holding device (22), and has a region of contact (34), which is defined by at least one contact location (36) for establishing contact with the packaging material (6, 10), wherein the region of contact (34) has a curvature in the longitudinal direction (L_{H}) of the holding device (22), wherein the step of gripping the packaging material (6, 10) by means of the handling apparatus (4) comprises:
rolling the holding device (22) on a surface (6a, 10a) of the packaging material (6, 10) in the transverse direction (Q_{V}) of the packaging material (6, 10) along the curvature of the region of contact (34).

6. The method according to claim 5, **characterized in that** the curvature of the region of contact (34) is defined by a quadratic function.

7. The method according to claim 5 or 6, **characterized in that** the curvature of the region of contact (34) has a radius of curvature (R) which is between 1 mm and 10 000 mm, preferably between 1000 mm and 3000 mm, more preferably between 2200 mm and 2400 mm.

8. The method according to one of claims 5 to 7, **characterized in that** the holding device (22) is formed as a suction device.

9. The method according to one of claims 5 to 8, **characterized in that** the holding device (22) comprises a plurality of contact locations (36) for establishing contact with the packaging material (6, 10).

10. The method according to one of claims 5 to 9, **characterized in that** the holding device (22) is at least temporarily in engagement with the free end portion (44) of the packaging material (6, 10), wherein the longitudinal direction (L_{H}) of the holding device (22) is oriented perpendicularly in relation to the longitudinal direction (L_{V}) of the packaging material (6, 10) and parallel to the transverse direction (Q_{V}) of the packaging material (6, 10).

11. The method according to one of claims 5 to 10, **characterized in that** the region of contact (34) of the holding device (22) extends over at least 30%, preferably over at least 60%, more preferably over 100%, of a width (B_{VM}) of the packaging material (6, 10) in the transverse direction (Q_{V}) of the packaging material (6, 10).

12. The method according to one of claims 5 to 11, **characterized in that** the packaging machine (2) also comprises a robot (24), on which the handling apparatus (4) is mounted and which is configured to introduce the free end portion (44) of the packaging material (6, 10) into the first processing station (8) by means of the handling apparatus (4).

13. The method according to claim 12, **characterized in that** the robot (24) is displaceable along the packaging machine (2).

14. The method according to one of the preceding claims, **characterized in that** the step of gripping the packaging material (6, 10) by means of the handling apparatus (4) comprises generating a tensile force (F_{Z}) of at least 15 N, preferably at least 45 N and more preferably at least 65 N, in the packaging material (6, 10) in the transverse direction (Q_{V}) of the packaging material (6, 10).

## Revendications

1. Procédé de mise en place d'un matériau d'emballage en forme de bande (6, 10) dans une machine d'emballage (2), avec les étapes suivantes :
la fourniture du matériau d'emballage en forme de bande (6, 10) ;
la saisie du matériau d'emballage en forme de bande (6, 10) au moyen d'un dispositif de manipulation (4), une section d'extrémité libre (44) du matériau d'emballage (6, 10) étant bombée dans une direction transversale (Q_{V}) du matériau d'emballage (6, 10) et faisant saillie du dispositif de manipulation (4) ; et
l'insertion de la section d'extrémité libre (44) du matériau d'emballage (6, 10) dans un premier poste de traitement (8) de la machine d'emballage (2) au moyen du dispositif de manipulation (4).

2. Procédé selon la revendication 1, **caractérisé en ce qu'**il comprend en outre les étapes suivantes :
la saisie de la section d'extrémité insérée (44) du matériau d'emballage (6, 10) par le premier poste de traitement (8) après l'insertion de la section d'extrémité libre (44) du matériau d'emballage (6, 10) dans le premier poste de traitement (8) ;
la libération de la section d'extrémité libre (44) du matériau d'emballage (6, 10) par le dispositif de manipulation (4) avant le premier poste de traitement (8) après la saisie de la section d'extrémité libre (44) par le premier poste de traitement (8) ;
la passage du matériau d'emballage (6, 10) à travers le premier poste de traitement (8) ;
la nouvelle saisie de la section d'extrémité libre (44) du matériau d'emballage (6, 10) au moyen du dispositif de manipulation (4) après le premier poste de traitement (8).

3. Procédé selon la revendication 1, **caractérisé en ce qu'**il comprend en outre l'étape suivante :
le passage conjoint de la section d'extrémité libre (44) du matériau d'emballage (6, 10) et du dispositif de manipulation (4) à travers le premier poste de traitement (8).

4. Procédé selon l'une quelconque des revendications 1 à 3, **caractérisé en ce que** la machine d'emballage (2) comprend une pluralité de postes de traitement (8, 12, 14, 16, 18, 20) comprenant le premier poste de traitement (8) et au moins un deuxième poste de traitement (12), et **en ce que** le procédé comprend en outre l'insertion de la section d'extrémité libre (44) du matériau d'emballage (6, 10) dans chaque poste de traitement (8, 12, 14, 16, 18, 20) de la pluralité de postes de traitement (8, 12, 14, 16, 18, 20).

5. Procédé selon l'une quelconque des revendications précédentes, **caractérisé en ce que** le dispositif de manipulation (4) est un dispositif de manipulation (4) destiné à manipuler un matériau d'emballage en forme de bande (6, 10), le dispositif de manipulation (4) comprenant un appareil de maintien (22) adapté pour saisir le matériau d'emballage en forme de bande (6, 10), l'appareil de maintien (22) s'étendant plus loin dans une direction longitudinale (L_{H}) de l'appareil de maintien (22) que dans deux directions transversales mutuellement perpendiculaires (Q₁, Q₂) de l'appareil de maintien (22), qui sont chacune orientées perpendiculairement à la direction longitudinale (L_{H}) de l'appareil de maintien (22), et présentant une zone de contact (34) définie par au moins un point de contact (36) pour entrer en contact avec le matériau d'emballage (6, 10), la zone de contact (34) présentant une courbure dans la direction longitudinale (L_{H}) de l'appareil de maintien (22), l'étape de saisie du matériau d'emballage (6, 10) au moyen du dispositif de manipulation (4) comprenant :
le roulement de l'appareil de maintien (22) sur une surface (6a, 10a) du matériau d'emballage (6, 10) dans la direction transversale (Q_{V}) du matériau d'emballage (6, 10) le long de la courbure de la zone de contact (34).

6. Procédé selon la revendication 5, **caractérisé en ce que** la courbure de la zone de contact (34) est définie par une fonction quadratique.

7. Procédé selon la revendication 5 ou 6, **caractérisé en ce que** la courbure de la zone de contact (34) présente un rayon de courbure (R) compris entre 1 mm et 10 000 mm, de préférence entre 1 000 mm et 3 000 mm, plus préférentiellement entre 2 200 mm et 2 400 mm.

8. Procédé selon l'une quelconque des revendications 5 à 7, **caractérisé en ce que** l'appareil de maintien (22) est réalisé sous forme d'appareil d'aspiration.

9. Procédé selon l'une quelconque des revendications 5 à 8, **caractérisé en ce que** l'appareil de maintien (22) comprend une pluralité de points de contact (36) pour la mise en contact du matériau d'emballage (6, 10).

10. Procédé selon l'une quelconque des revendications 5 à 9, **caractérisé en ce que** l'appareil de maintien (22) est au moins temporairement en prise avec la section d'extrémité libre (44) du matériau d'emballage (6, 10), la direction longitudinale (L_{H}) de l'appareil de maintien (22) étant orientée perpendiculairement à la direction longitudinale (L_{V}) du matériau d'emballage (6, 10) et parallèlement à la direction transversale (Q_{V}) du matériau d'emballage (6, 10).

11. Procédé selon l'une quelconque des revendications 5 à 10, **caractérisé en ce que** la zone de contact (34) de l'appareil de maintien (22) s'étend sur au moins 30 %, de préférence sur au moins 60 %, plus préférentiellement sur 100 % d'une largeur (B_{VM}) du matériau d'emballage (6, 10) dans la direction transversale (Q_{V}) du matériau d'emballage (6, 10).

12. Procédé selon l'une quelconque des revendications 5 à 11, **caractérisé en ce que** la machine d'emballage (2) comprend en outre un robot (24) sur lequel est monté le dispositif de manipulation (4) et qui est adapté pour insérer la section d'extrémité libre (44) du matériau d'emballage (6, 10) dans le premier poste de traitement (8) au moyen du dispositif de manipulation (4).

13. Procédé selon la revendication 12, **caractérisé en ce que** le robot (24) peut se déplacer le long de la machine d'emballage (2).

14. Procédé selon l'une quelconque des revendications précédentes, **caractérisé en ce que** l'étape de saisie du matériau d'emballage (6, 10) au moyen du dispositif de manipulation (4) comprend la génération d'une force de traction (F_{Z}) dans le matériau d'emballage (6, 10) dans la direction transversale (Q_{V}) du matériau d'emballage (6, 10) qui est d'au moins 15 N, de préférence d'au moins 45 N et plus préférentiellement d'au moins 65 N.
